# EUROPÄISCHE PATENTANMELDUNG

(11) **EP 1 143 376 A1**
(43) Veröffentlichungstag der Anmeldung: **10.10.2001**
(21) Anmeldenummer: 00107535.7
(22) Anmeldetag: 07.04.2000
(51) Int. Cl.: G06K 19/06, G07B 11/00

(54) **Karte**

(71) Anmelder: Nagels Druck Gesellschaft mbH, 47906 Kempen (DE)
(72) Erfinder: Nagels, Werner, 47906 Kempen (DE)
(74) Vertreter: DR. STARK & PARTNER

(57) **Zusammenfassung**

Die Erfindung betrifft eine Karte, insbesondere Eintritts- oder Parkhauskarte oder -ticket, auf der mittels einer Leseeinrichtung lesbare Informationen und/oder von einem Benutzer lesbare Informationen hinterlegbar sind. Um eine herkömmliche Karte so zu verbessern, dass Informationen nicht für jedermann sichtbar hinterlegt werden können, soll die Karte eine entfernbare, die Karte zumindest bereichsweise überdeckende Schicht aufweisen.

## Beschreibung

Die Erfindung betrifft eine Karte, insbesondere Eintrittsoder Parkhauskarte oder -ticket, auf der mittels einer Leseeinrichtung lesbare Informationen und/oder von einem Benutzer lesbare Informationen hinterlegbar sind.

Derartige Karten enthalten üblicherweise - sofern es sich z. B. um eine Eintrittskarte für ein Kino oder ein Theater handelt - Informationen darüber, dass die betreffende Person zum Eintritt in eine bestimmte Veranstaltung berechtigt ist. Sofern es sich um eine Parkhauskarte handelt, so sind üblicherweise Daten z. B. über die Parkdauer hinterlegt. Ferner wird nach dem Entrichten der Parkgebühr festgehalten, dass die betreffende Person die Parkgebühr entrichtet hat und somit zum Verlassen des Parkhauses berechtigt ist. Üblicherweise werden diese Daten entweder auf die Karte aufgedruckt oder aber elektronisch z. B. in einem Chip oder in einem Magnetstreifen gespeichert.

Als nachteilig erweist sich, dass nicht die Möglichkeit besteht, weitere Informationen zu hinterlegen, die nicht für jedermann zugänglich sind. So können diese weiteren Informationen z. B. bei der Herausgabe und Kontrolle von Eintrittskarten oder beim Auffüllen eines Parkscheinautomaten mit Karten von jedem gelesen werden. Auch erweist sich als nachteilig, dass wenn z. B. eine Parkquittung benötigt wird, neben der Parkhauskarte, die beim Verlassen des Parkhauses in einen entsprechenden Automaten am Ausgang eingeführt werden muss, noch eine separate Quittung ausgedruckt werden muss, wobei aufgrund der unterschiedlichen Formate und Materialien wenigstens zwei separate Drucker sowie eine weitere Bevorratungseinrichtung für die Quittung erforderlich ist.

Aufgabe der Erfindung ist es daher, eine herkömmliche Karte so zu verbessern, dass weitere Informationen nicht für jedermann sichtbar hinterlegt werden können.

Diese Aufgabe wird dadurch gelöst, dass die Karte eine entfernbare, die Karte zumindest bereichsweise überdeckende Schicht aufweist. Mittels einer derartigen Schicht können zum einen auf der Karte befindliche weitere Informationen vor unbefugtem Gebrauch geschützt werden. Zum anderen können auf der Schicht selbst ebenfalls weitere Informationen bzw. Daten aufgebracht werden.

Sofern mit der Schicht weitere Informationen vor Unbefugten geschützt werden sollen, bietet sich an, dass die Schicht in dem Bereich der Karte angebracht ist, wo nur für den Verbraucher bestimmte weitere Informationen hinterlegt sind und dass die Schicht diese nur für den Verbraucher bestimmten weiteren Informationen überdeckt.

Die Schicht kann als flächiges Gebilde ausgebildet sein, das beispielsweise aus Papier, Pappe, Folie oder dergleichen besteht. Es ist aber auch durchaus möglich, dass andere dünne flächige Gebilde wie z. B. Metallfolien Anwendung finden.

Dabei bietet sich an, dass das flächige Gebilde zumindest bereichsweise mit der Karte verklebt oder verschweißt ist. Hierdurch wird einerseits gewährleistet, dass das flächige Gebilde hinreichend an der Karte fixiert ist. Andererseits wird ermöglicht, dass das flächige Gebilde leicht entfernbar ist.

Bei einer bevorzugten Ausführung der Erfindung ist die Schicht bzw. das flächige Gebilde vorzugsweise auf der der Karte abgewandten Seite bedruckbar. Handelt es sich beispielsweise um eine Parkhauskarte, die beim Verlassen des Parkhauses in den jeweiligen Automaten zur Öffnung der Schranke eingeführt wird, kann auf die Schicht bzw. das flächige Gebilde direkt die Quittung aufgedruckt werden. Benötigt der Parkhausbenutzer die Quittung, so kann er diese leicht von der Karte entfernen, ohne dass wie bei herkömmlichen Karten eine separate Quittung ausgedruckt werden muss.

Die Schicht kann auch aus einem abzurubbelnden oder abzukratzenden Material bestehen. Eine derartige Ausbildung bietet sich an, wenn die Karte beispielsweise gleichzeitig als Loskarte dient und mittels der Schicht z. B. die Losnummer abgedeckt wird.

Zweckmäßigerweise kann die Schicht und/oder die Karte nach Entfernung der Schicht von der Karte rückstandsfrei sein. Unter "rückstandsfrei" wird verstanden, dass auf der Karte und/oder der Schicht bzw. dem flächigen Gebilde z. B. keine Klebe- oder Schweißreste verbleiben. Hierdurch wird gewährleistet, dass die Schicht bzw. das flächige Gebilde, sofern es sich um eine Quittung handelt, z. B. ohne Weiteres in ein Portemonnaie oder eine Brieftasche einsteckbar und später gegebenenfalls abheftbar ist und nicht überall festklebt. Auch können die erfindungsgemäßen Karten, sofern es sich um Parkhauskarten handelt, nach Entfernung der Schicht bzw. des flächigen Gebildes in einer automatischen Leseeinrichtung sicher transportiert werden.

Dabei kann zur Hinterlegung der mittels der Leseeinrichtung lesbaren Informationen ein Magnetstreifen vorgesehen sein.

Zur Hinterlegung der vom Benutzer lesbaren Informationen kann ein Thermostreifen vorgesehen sein.

## Patentansprüche

1. Karte, insbesondere Eintritts- oder Parkhauskarte oder -ticket, auf der mittels einer Leseeinrichtung lesbare Informationen und/oder von einem Benutzer lesbare Informationen hinterlegbar sind, **dadurch gekennzeichnet, dass** die Karte eine entfernbare, die Karte zumindest bereichsweise überdeckende Schicht aufweist.

2. Karte nach Anspruch 1, **dadurch gekennzeichnet, dass** die Schicht in dem Bereich der Karte angebracht ist, wo nur für den Verbraucher bestimmte weitere Informationen hinterlegt sind und **dass** die Schicht diese nur für den Verbraucher bestimmten weiteren Informationen überdeckt.

3. Karte nach Anspruch 1 oder 2, **dadurch gekennzeichnet, dass** die Schicht ein flächiges Gebilde ist.

4. Karte nach Anspruch 3, **dadurch gekennzeichnet, dass** das flächige Gebilde aus Papier, Pappe, Folie oder dergleichen besteht.

5. Karte nach Anspruch 3 oder 4, **dadurch gekennzeichnet, dass** das flächige Gebilde zumindest bereichsweise mit der Karte verklebt oder verschweißt ist.

6. Karte nach einem der Ansprüche 1 bis 5, **dadurch gekennzeichnet, dass** die Schicht bzw. das flächige Gebilde vorzugsweise auf der der Karte abgewandten Seite bedruckbar ist.

7. Karte nach Anspruch 1 oder 2, **dadurch gekennzeichnet, dass** die Schicht aus einem abzurubbelnden oder abzukratzenden Material besteht.

8. Karte nach einem der Ansprüche 1 bis 7, **dadurch gekennzeichnet, dass** die Schicht und/oder die Karte nach Entfernung der Schicht von der Karte rückstandsfrei ist (sind).

9. Karte nach einem der Ansprüche 1 bis 8, **dadurch gekennzeichnet, dass** zur Hinterlegung der mittels der Leseeinrichtung lesbaren Informationen ein Magnetstreifen vorgesehen ist.

10. Karte nach einem der Ansprüche 1 bis 9, **dadurch gekennzeichnet, dass** zur Hinterlegung der vom Benutzer lesbaren Informationen ein Thermostreifen vorgesehen ist.
